# EUROPÄISCHE PATENTANMELDUNG

(11) **EP 2 927 425 A1**
(43) Veröffentlichungstag der Anmeldung: **07.10.2015**
(21) Anmeldenummer: 14162726.5
(22) Anmeldetag: 31.03.2014
(51) Int. Cl.: F01D 5/06

(54) **Läufer für eine Gasturbine mit Verdrehsicherung für eine Wellenmutter**

(71) Anmelder: Siemens Aktiengesellschaft, 80333 München (DE)
(72) Erfinder: Dungs, Sascha, 46485 Wesel (DE); Hoell, Harald, 63607 Wächtersbach (DE); Kolk, Karsten, 45479 Mülheim a.d. Ruhr (DE); Lange, Marc, 50737 Köln (DE); Schröder, Peter, 45307 Essen (DE); Springborn, Dirk, 12203 Berlin (DE); Veitsman, Vyacheslav, 45879 Gelsenkirchen (DE)

(57) **Zusammenfassung**

Ein Läufer (1) für eine Gasturbine wird angegeben, der eine einfach herstellbare und effektive Verdrehsicherung für eine Mutter (10) umfasst, die auf einer Welle (2) oder einem Zuganker (6) des Läufers (1) aufgeschraubt ist. In die Welle (2) bzw. den Zuganker (6) ist mit Abstand zu der Mutter (10) eine umlaufende Nut (25) eingebracht, wobei in der Nut (25) ein Sicherungsring (30) einliegt. Der Sicherungsring (30) ist mit der Mutter (10) in Axialrichtung (A) verspannt, so dass die Mutter (10) relativ zu der Welle (2) bzw. dem Zuganker (6) gegen Verdrehen gesichert ist. Der Sicherungsring (30) ist aus mindestens zwei zu einem Vollring zusammengesetzten Ringsegmenten (31) gebildet.

## Beschreibung

Die Erfindung bezieht sich auf einen Läufer für eine Gasturbine. Die Erfindung bezieht sich weiterhin auf eine Gasturbine, die den Läufer umfasst.

Ein Läufer (Rotor) einer Gasturbine besteht üblicherweise aus einem mehrstufigen Verdichterteil sowie aus einem mehrstufigen Turbinenteil, wobei Verdichterteil und Turbinenteil auf einer gemeinsamen Welle gelagert sind. In einer herkömmlichen Bauform umfassen sowohl Verdichterteil als auch Turbinenteil jeweils ein Paket von Läuferscheiben. Beide Scheibenpakete sind über eine mittlere Hohlwelle miteinander verbunden und über einen gemeinsamen zentralen Zuganker verspannt.

Zur Montage eines derartigen Läufers wird zunächst das Scheibenpaket des Verdichterteils inklusive der Hohlwelle montiert und mit einer Spannvorrichtung gegenüber dem Zuganker verspannt. Anschließend wird eine (Schrauben-)Mutter auf den Zuganker aufgeschraubt. Die Mutter ist dabei als eine Stützscheibe ausgebildet, die die Hohlwelle radial gegen den Zuganker abstützt. Zur Montage des Läufers wird die Mutter derart auf den Zuganker aufgeschraubt, dass diese an einem innenseitigen Axialanschlag der mittleren Hohlwelle anliegt und die Vorspannung hält. Nachfolgend werden die Turbinenscheiben montiert, worauf letztlich der gesamte Läufer mit Hilfe einer Spannmutter verspannt wird, die am turbinenseitigen Ende auf den Zuganker aufgeschraubt wird.

Im Zuge der Montage des Turbinenteils löst sich jedoch durch Dehnung des Zugankers die Mutter von dem Axialanschlag, wodurch sich die Mutter (bzw. Stützscheibe) im Betrieb des Läufers gegenüber dem Zuganker verdrehen kann.

Der Erfindung liegt die Aufgabe zugrunde, eine Verdrehung einer auf die Welle oder einen Zuganker eines Läufers einer Gasturbine aufgeschraubten Mutter auf einfache und effektive Weise zu verhindern.

Diese Aufgabe wird erfindungsgemäß gelöst durch die Merkmale des Anspruchs 1. Vorteilhafte und teils für sich erfinderische Ausführungsformen und Weiterentwicklungen der Erfindung sind in den Unteransprüchen und der nachfolgenden Beschreibung dargelegt.

Der erfindungsgemäße Läufer für eine Gasturbine umfasst eine Welle oder einen axial geführten Zuganker, sowie eine auf der Welle bzw. dem Zuganker aufgeschraubte (Schrauben-)Mutter. In die Welle bzw. den Zuganker ist mit Abstand zu der Mutter eine umlaufende Nut eingebracht, in der ein Sicherungsring einliegt. Der Sicherungsring ist im Montagezustand mit der Mutter in Axialrichtung verspannt, so dass die Mutter relativ zu der Welle bzw. dem Zuganker gegen Verdrehen gesichert ist. Erfindungsgemäß ist der Sicherungsring aus mindestens zwei, vorzugsweise genau zwei, zu einem Vollring zusammengesetzten Ringsegmenten gebildet.

Vorteilhafterweise stellt der geteilte Sicherungsring eine vergleichsweise einfach herstellbare und dennoch effektive Verdrehsicherung für eine Mutter dar. Zudem ist der geteilte Sicherungsring einfach montierbar. Weiterhin ist der Sicherungsring zerstörungsfrei demontierbar, so dass sowohl die Mutter als auch der Sicherungsring vorteilhaft wieder verwendbar sind. Hierdurch können Herstellungs- und Wartungskosten für den Läufer bzw. die Gasturbine reduziert werden.

Prinzipiell ist es im Rahmen der Erfindung denkbar, dass der Sicherungsring und die Mutter zur axialen Verspannung durch ein Spannelement, beispielsweise ein Federelement, voneinander abgedrückt werden. Vorzugsweise ist im Rahmen der Erfindung jedoch vorgesehen, dass Sicherungsring und Mutter durch eine axiale Zugkraft miteinander verspannt werden.

Dabei ist in besonders bevorzugter Ausführungsform vorgesehen, dass der Sicherungsring und die Mutter mit mindestens zwei Spannschrauben verspannt sind. Die zwei (oder mehr) Spannschrauben sind dabei vorzugsweise gleichmäßig über den Umfang des Sicherungsrings verteilt. Die Mutter ist insbesondere mit entsprechenden Gewindebohrungen versehen.

Vorzugsweise sind die Ringsegmente des Sicherungsrings durch die Spannschrauben miteinander verbunden, so dass die Spannschrauben vorteilhafterweise synergetisch als Spannelement und als Verbindungselement eingesetzt sind.

In einer konstruktiv vorteilhaften Ausführungsform weist jedes Ringsegment an beiden (Umfangs-)Enden jeweils einen Endabschnitt mit reduzierter Materialstärke auf. Dabei sind aneinander angrenzende Endabschnitte benachbarter Ringsegmente jeweils komplementär ausgeführt und überlappen sich in zusammengesetztem Zustand der Ringsegmente. Die aneinander angrenzenden Ringsegmente sind somit - ähnlich zu einer in der Holzverbindungstechnik eingesetzten "Überblattung" - miteinander verbunden.

Vorzugsweise ist dabei die Materialstärke eines jeden Ringsegments in den Endabschnitten im Vergleich zu einem Mittelabschnitt des jeweiligen Ringsegments jeweils auf die Hälfte reduziert, so dass der zusammengesetzte Sicherungsring über seinen gesamten Umfang eine einheitliche Materialstärke aufweist.

Die Reduzierung erfolgt bevorzugt in Form eines Absatzes oder einer Stufe, wodurch vorteilhaft ein definierter Montageanschlag für das jeweils angrenzende Ringsegment gebildet ist. Eine solche Abstufung ist - analog zu dem in der Holzverarbeitungstechnik gebräuchlichen Begriff - nachfolgend als "Falz" bezeichnet.

In einer bevorzugten Ausführungsform ist jedes Ringsegment in beiden Endabschnitten jeweils mit einer Bohrung versehen, die derart angeordnet ist, dass sich die Bohrungen der überlappenden Endabschnitte angrenzender Ringsegmente jeweils zur Bildung eines von einer der Spannschrauben durchsetzten Durchgangslochs fluchtend überlagern.

Im Sinne einer materialsparenden Ausgestaltung umfasst jeder Endabschnitt eines jeden Ringsegments jeweils eine Lasche, die gegenüber dem Mittelabschnitt radial nach außen abragt. Insbesondere ragt jede Lasche radial aus der Nut heraus, während der Mittelabschnitt des jeweiligen Ringsegments lediglich mit einem vergleichsweise schmalen Rand über die Nut hinaussteht.

Zweckmäßigerweise sind alle Ringsegmente identisch ausgebildet.

In bevorzugter Ausführungsform ist die Mutter als eine auf dem Zuganker sitzende Stützscheibe ausgebildet, die zur radialen Verstrebung einer koaxial mit dem Zuganker ausgerichteten Hohlwelle gegenüber dem Zuganker dient.

In einer Ausführungsform umfasst der Läufer dabei einen Verdichterteil, wobei die Stützscheibe vorzugsweise derart auf den Zuganker aufgeschraubt ist, dass sie im Zuge der Läufermontage zur axialen Verspannung des Verdichterteils an einem Axialanschlag der Hohlwelle anstößt.

Vorzugsweise ist die Stützscheibe mit in Axialrichtung durchgehenden Ausnehmungen zur Führung von Kühlluft versehen.

Nachfolgend wird ein Ausführungsbeispiel der Erfindung anhand einer Zeichnung näher erläutert. Darin zeigen:
- FIG 1: in einer schematischen Längsschnittdarstellung einen Ausschnitt eines Läufers einer Gasturbine, wobei der Läufer eine auf einem Zuganker verschraubte Stützscheibe umfasst,
- FIG 2: in perspektivischer Ansicht den Zuganker gemäß FIG 1, in den eine umlaufende Nut zur Aufnahme eines Sicherungsrings eingebracht ist,
- FIG 3: in perspektivischer Ansicht die Stützscheibe, die mit Hilfe eines aus zwei Ringsegmenten gebildeten Sicherungsrings auf dem Zuganker verdrehgesichert ist,
- FIG 4: in einer schematischen Einzeldarstellung eines der Ringsegmente gemäß FIG 3,
- FIG 5: in Darstellung gemäß FIG 2 die Stützscheibe mit Blickrichtung auf zwei überlappende Endabschnitte der Ringsegmente, und
- FIG 6: einen Detailausschnitt VI gemäß FIG 5.

Einander entsprechende Teile sind in allen Figuren stets mit den gleichen Bezugszeichen versehen.

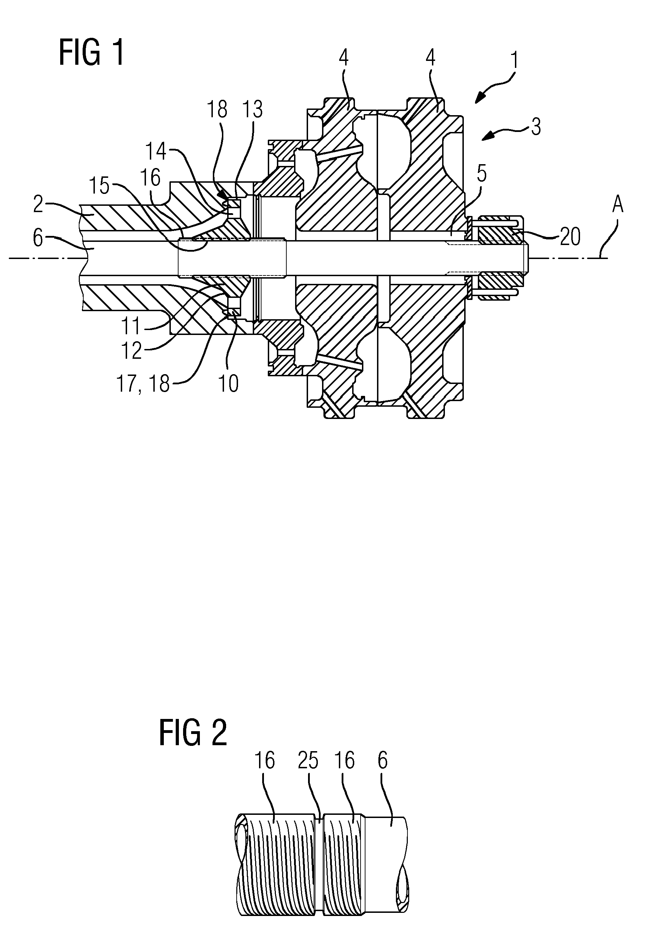

FIG 1 zeigt einen Ausschnitt eines Läufers 1 für eine Gasturbine. Der Läufer 1 umfasst einen (nicht explizit dargestellten) Verdichterteil, eine mittlere Hohlwelle 2 (in der Darstellung links) sowie einen Turbinenteil 3 (in der Darstellung rechts). Im Montagezustand des Läufers 1 ist zwischen Verdichterteil und Turbinenteil 3 eine Brennkammer angeordnet.

Der Turbinenteil 3 umfasst mehrere Turbinenscheiben 4, mit jeweils einer zentralen Bohrung 5, wobei durch die Bohrungen 5 ein zentraler Zuganker 6 entlang einer Achse A durchgeführt ist. Der Zuganker 6 ist auch durch die Hohlwelle 2 koaxial durchgeführt. Verdichterscheiben (nicht dargestellt), Hohlwelle 2 und Turbinenscheiben 4 sind mit Hilfe des Zugankers 6 in Axialrichtung zu einer Einheit miteinander verspannt. Um die Hohlwelle 2 im Betrieb des Läufers 1 gegen Schwingungen zu schützen, ist eine als Stützscheibe 10 ausgebildete Mutter vorgesehen. Die Stützscheibe 10 umfasst eine auf dem Zuganker 6 sitzende Nabe 11, von der ein Scheibenkörper 12 radial abragt. Mit einer Umfangsfläche 13 des Scheibenkörpers 12 liegt die Stützscheibe 10 an einer Innenwand der Hohlwelle 10 an, und bildet somit eine starre Verbindung zwischen Hohlwelle 2 und Zuganker 6. In den Scheibenkörper 12 sind axial durchgehende Ausnehmungen 14 zur Kühlluftführung eingebracht.

Bei der Montage des Läufers wird die Stützscheibe 10 als Spannmutter eingesetzt. Im Zuge der Läufermontage wird zunächst der Verdichterteil vormontiert und mit Hilfe einer Spannvorrichtung in Axialrichtung vorgespannt. Anschließend wird die Stützscheibe 10 mit einer zentralen Gewindebohrung 15 der Nabe 11 auf ein zugeordnetes Außengewinde 16 des Zugankers 6 aufgeschraubt, so dass die Stützscheibe 10 mit einem Außenrand 17 an einem innenseitigen Axialanschlag 18 der Hohlwelle 2 anschlägt, wodurch die axiale Vorspannung gehalten wird. Im weiteren Verlauf werden die Turbinenscheiben 4 montiert. Der gesamte Läufer 1 wird schließlich in herkömmlicher Weise mit einer Spannmutter 20 verspannt, die am turbinenseitigen Ende des Zugankers 6 aufgeschraubt wird. Durch eine hieraus resultierende Längenänderung des Zugankers 6 löst sich die Stützscheibe 10 von dem Axialanschlag 18, so dass eine für eine verdrehsichere Schraubenverbindung notwendige Axialspannung nicht mehr gegeben ist.

Um die Stützscheibe 10 dennoch im Betrieb des Läufers 1 gegen Verdrehen zu sichern, ist der Stützscheibe 10 eine Verdrehsicherung zugeordnet, deren Aufbau im Folgenden erläutert wird.

FIG 2 zeigt einen Ausschnitt des Zugankers 6. Gemäß der Darstellung ist der Abschnitt des Zugankers 6, in den das Außengewinde 16 eingeschnitten ist, in einer radialen Stufe erweitert. In den Bereich des Außengewindes 16 ist eine umlaufende Nut 25 eingedreht.

Im Zuge der Läufermontage wird die Stützscheibe 10 zunächst vom turbinenseitigen Ende des Zugankers 6 aus (in den Darstellungen jeweils rechts) über die Nut 25 hinweg auf das Außengewinde 16 aufgeschraubt, so dass die Stützscheibe 10 im Montagezustand jenseits der Nut 25 (mit einem Axialabstand zu der Nut 25) angeordnet ist.

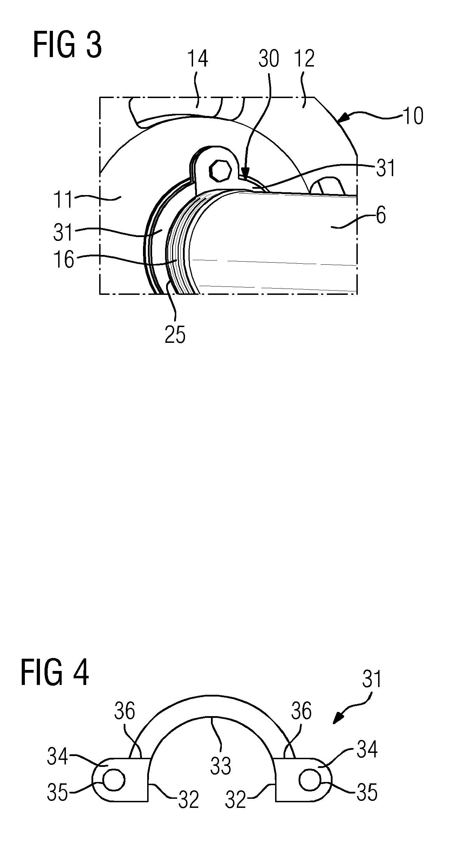

FIG 3 zeigt die Stützscheibe 10 in ihrem Montagezustand, in dem sie mittels eines in der Nut 25 einliegenden Sicherungsrings 30 gegenüber dem Zuganker 6 gegen Verdrehen gesichert ist.

Der Sicherungsring 30 besteht aus zwei identisch ausgebildeten Ringsegmenten 31, die zu dem Sicherungsring 30 zusammengesetzt sind.

In FIG 4 ist eines der Ringsegmente 31 in axialer Blickrichtung dargestellt. Jedes Ringsegment 31 ist gemäß FIG 4 in etwa als Halbring gefertigt. In Umfangsrichtung ist das Ringsegment 31 in je zwei Endabschnitte 32 und einen zwischengeordneten Mittelabschnitt 33 gegliedert.

Jeder Endabschnitt 33 umfasst eine Lasche 34, die von dem Mittelabschnitt 33 radial nach außen abragt, wobei eine Flächenausdehnung der Lasche 34 in etwa in der Radialebene des Ringsegments 31 liegt. Beide Laschen 34 ragen diametral von dem Mittelabschnitt 33 ab. In jede Lasche 34 ist jeweils eine in Axialrichtung durchgehende Bohrung 35 eingebracht. Jeder Endabschnitt 32 ist somit als eine Art Öse ausgeführt.

Die (axiale) Materialstärke jeden Endabschnitts 32 ist jeweils in Form einer Stufe 36 auf etwa die Hälfte der (axialen) Materialstärke des Mittelabschnitts 33 abgesetzt.

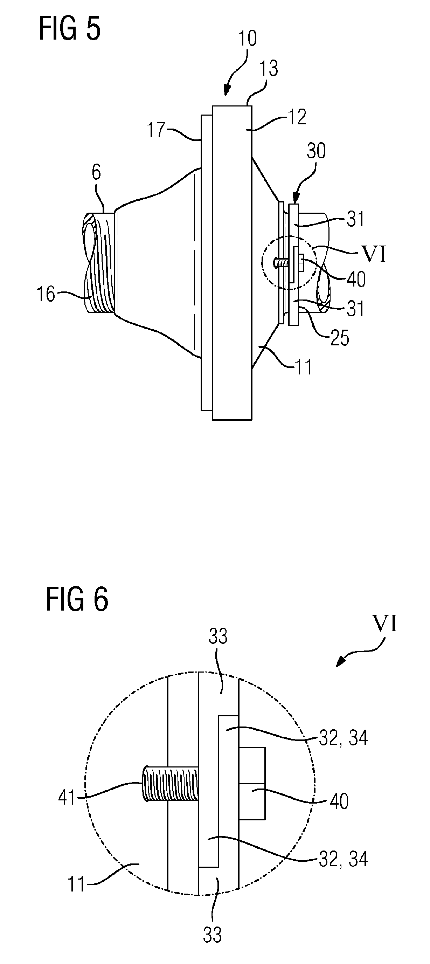

Ausweislich der Darstellungen gemäß der FIG 5 und FIG 6 werden zwei Ringsegmente 31 derart zusammengesetzt, dass sie sich im zusammengesetzten Zustand jeweils im Bereich zweier aufeinandertreffender Endabschnitte 32 überlappen. Dabei liegen die beiden Bohrungen 35 der jeweils überlappenden Laschen 34 jeweils kongruent aufeinander. Durch die Materialreduzierung im Endabschnitt 32 ergänzen sich die jeweils überlappenden Endabschnitte 32 in Axialrichtung, so dass der Sicherungsring 30 über seinen gesamten Umfang eine einheitliche Materialstärke aufweist. Der zusammengesetzte Sicherungsring 30 hat insgesamt die Form eines geschlossenen Rings, von dem zwei (aus jeweils zwei Laschen 34 zusammengesetzte) Ösen - um 180° versetzt - in Radialrichtung nach außen abragen. Ein radial innenliegender Innenrand des Sicherungsrings 30 ist im Wesentlichen durchgehend kreisrund ausgebildet.

Im Montagezustand ist der Sicherungsring 30 schließlich mit der Stützscheibe 10 mittels zweier Spannschrauben 40 auf Zug verspannt. Dabei ist jede Spannschraube 40 durch jeweils zwei fluchtenden Bohrungen 35 zweier überlappender Laschen 34 geführt und in jeweils einer ebenfalls mit den Bohrungen 35 fluchtenden Gewindebohrung 41 der Stützmutter 10 verschraubt. Die Gewindebohrungen sind dementsprechend diametral gegenüberliegend in die Nabe 11 der Stützscheibe 10 eingebracht.

Optional sind die Spannschrauben 40 jeweils mit einer herkömmlichen Schraubensicherung gegen Lösen gesichert, beispielsweise durch Unterlegen einer Federscheibe oder eines Keilsicherungsscheibenpaars oder ähnlichem.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden.

## Patentansprüche

1. Läufer (1) für eine Gasturbine mit einer Welle (2) oder einem axial geführten Zuganker (6) sowie mit einer auf der Welle (2) bzw. dem Zuganker (6) aufgeschraubten Mutter (10),
- wobei in die Welle (2) bzw. den Zuganker (6) mit Abstand zu der Mutter (10) eine umlaufende Nut (25) eingebracht ist,
- wobei in der Nut (25) ein Sicherungsring (30) einliegt, der mit der Mutter (10) in Axialrichtung (A) verspannt ist, so dass die Mutter (10) relativ zu der Welle (2) bzw. dem Zuganker (6) gegen Verdrehen gesichert ist, und
- wobei der Sicherungsring (30) aus mindestens zwei zu einem Vollring zusammengesetzten Ringsegmenten (31) gebildet ist.

2. Läufer (1) nach Anspruch 1,
wobei der Sicherungsring (30) und die Mutter (10) mit mindestens zwei Spannschrauben (40) verspannt sind.

3. Läufer (1) nach Anspruch 2,
wobei die Ringsegmente (31) des Sicherungsrings (30) durch die Spannschrauben (40) miteinander verbunden sind.

4. Läufer (1) nach einem der Ansprüche 1 bis 3,
wobei jedes Ringsegment (31) an beiden Enden jeweils einen Endabschnitt (32) mit reduzierter Materialstärke aufweist, und wobei die aneinander angrenzenden Endabschnitte (32) benachbarter Ringsegmente (31) jeweils komplementär ausgeführt sind und sich in zusammengesetztem Zustand der Ringsegmente (31) überlappen.

5. Läufer (1) nach Anspruch 4,
wobei die Materialstärke eines jedes Ringsegments (31) in den Endabschnitten (32) im Vergleich zu einem Mittelabschnitt (33) des jeweiligen Ringsegments (31) jeweils auf die Hälfte reduziert ist, so dass der zusammengesetzte Sicherungsring (30) über seinen gesamten Umfang eine einheitliche Materialstärke aufweist.

6. Läufer (1) nach den Ansprüchen 3 und 4 oder den Ansprüchen 3 und 5,
wobei jedes Ringsegment (31) in beiden Endabschnitten (32) jeweils mit einer Bohrung (35) versehen ist, die derart angeordnet ist, dass sich die Bohrungen (35) der überlappenden Endabschnitte (32) angrenzender Ringsegmente (31) jeweils zur Bildung eines von einer der Spannschrauben (40) durchsetzten Durchgangslochs fluchtend überlagern.

7. Läufer (1) nach Anspruch 6,
wobei jeder Endabschnitt (32) eines jeden Ringsegments (31) eine radial abragende Lasche (34) umfasst.

8. Läufer (1) nach einem der Ansprüche 4 bis 7,
wobei alle Ringsegmente (31) identisch ausgebildet sind.

9. Läufer (1) nach einem der Ansprüche 1 bis 8,
wobei die Mutter (10) als auf dem Zuganker (6) sitzende Stützscheibe ausgebildet ist, die zur radialen Abstützung einer koaxial mit dem Zuganker (6) ausgerichteten Hohlwelle (2) gegenüber dem Zuganker (6) dient.

10. Läufer (1) nach Anspruch 9,
mit einem Verdichterteil, wobei die Stützscheibe (10) derart auf den Zuganker (6) aufgeschraubt ist, dass sie bei der Läufermontage zur axialen Verspannung des Verdichterteils an einem Axialanschlag (18) der Hohlwelle (2) anstößt.

11. Läufer (1) nach Anspruch 9 oder 10,
wobei die Stützscheibe (10) mit in Axialrichtung durchgehenden Ausnehmungen (14) zur Führung von Kühlluft versehen ist.

12. Gasturbine mit einem Läufer (1) gemäß einem der Ansprüche 1 bis 11.
